# EUROPEAN PATENT APPLICATION

(11) **EP 4 134 422 A1**
(43) Date of publication of application: **15.02.2023**
(21) Application number: 21191312.4
(22) Date of filing: 13.08.2021
(51) Int. Cl.: C11D 3/37, C08F 290/06, C08F 226/04, C08G 65/332, C11D 11/00, C11D 3/00, C11D 3/395

(54) **(CO)POLYMERS AND THEIR USE IN CLEANING COMPOSITIONS**

(71) Applicant: Clariant International Ltd, 4132 Muttenz (CH)
(72) Inventor: GUO, Xiaoqiang, 65926 Frankfurt am Main (DE); SAHL, Mike, 65926 Frankfurt am Main (DE)
(74) Representative: Paczkowski, Marcus

(57) **Abstract**

The present invention relates to macromonomers represented by the formula (I).

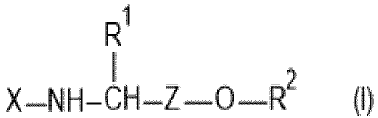

Furthermore, the present invention also refers to (co)polymers comprising structural units a) derived from one or more macromonomers of formula (I) of the present invention and to cleaning compositions comprising one or more of such (co)polymers. Moreover, the present invention relates to uses of such cleaning compositions for the treatment of hard surfaces, for easier next time cleaning of hard surfaces and for preventing the build-up of limescale on hard surfaces.

## Description

The present invention relates to macromonomers represented by the formula (I)

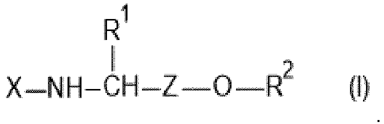

Furthermore, the present invention also refers to (co)polymers comprising structural units a) derived from one or more macromonomers of formula (I) of the present invention and to cleaning compositions comprising one or more of such (co)polymers. Moreover, the present invention relates to uses of such cleaning compositions for the treatment of hard surfaces, for easier next time cleaning of hard surfaces and for preventing the build-up of limescale on hard surfaces.

Limescale build-up, in particular on hard surfaces, is disturbing and undesired. There are already cleaning compositions in the art, which help to remove already built-up limescale. However, undesired limescale frequently reoccurs after the use of the cleaning composition applied in order to remove already built-up limescale.

Furthermore, soils other than limescale, such as soap scum, kitchen oil or fecal residues are strongly undesired and their removal requires effort. Therefore, easier next time cleaning for the subsequent cleaning procedures, which require less effort for cleaning, is desired.

US 6,255,267 B1 discloses an improved liquid toilet bowl cleanser comprising a fluorosurfactant coating agent composition, which adheres to and coats the porcelain surface of the toilet bowl during the active life of the cleanser composition and prevents the formation of toilet bowl stains and mineral deposits for a substantial period of time after manual cleaning.

US 7,202,200 B1 discloses an improved, liquid aqueous hard surface cleaner containing a fluoropolymer having a molecular weight of no less than 5 000 Daltons, further containing preferably a non-ionic surfactant, optionally, a quaternary ammonium compound, a chelating agent/buffer and water to provide enhanced cleaning of hard surfaces, especially vitreous surfaces, in which the thus cleaned surface is rendered soil and stain repellent.

There is still a need for cleaning compositions which have beneficial cleaning properties such as the property of preventing limescale build-up, and/or providing easier next time cleaning, preferably on hard surfaces.

Therefore, the object of the present invention is to provide cleaning compositions which have beneficial cleaning properties such as the property of preventing limescale build-up and/or providing easier next time cleaning, e.g. with respect to soil such as soap scum, kitchen oil or fecal residues, and preferably on hard surfaces.

Surprisingly, this object can be solved by cleaning compositions comprising one or more (co)polymers, which comprise one or more macromonomeric structural units derived from one or more macromonomers of the present invention, and preferably one or more surfactants.

An aspect of the present invention relates to a macromonomer represented by the formula (I) 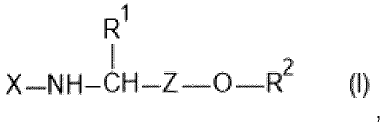 wherein
- R¹: is linear or branched alkyl having 1 to 20, preferably 1 to 4 carbon atoms and more preferably 1 carbon atom (methyl);
- Z: is linear or branched alkylene having 1 to 20, preferably 1 to 4 carbon atoms and more preferably 1 carbon atom (methylene, -CH₂-);
- R²: is selected from the group consisting of a residue represented by residue R^{II}, hydrogen, and linear or branched alkyl having 1 to 20 carbon atoms,
wherein residue R^{II} consists of:
a number of n chemical units of formula (ii-a): 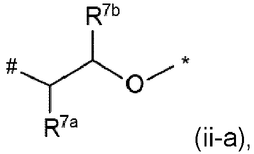
a number of m chemical units of each of formula (ii-b): 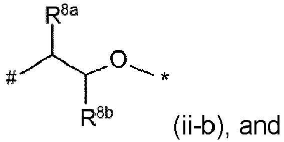
exactly one terminal residue T,
   wherein
   R^{7a}, R^{7b}, R^{8a} and R^{8b} are independently of each other hydrogen or an alkyl group having 1 to 4 carbon atoms, preferably hydrogen or methyl,
   where the substituents R^{7a}, R^{7b}, R^{8a} and R^{8b} are chosen such that both of either R^{7a} and R^{7b} or R^{8a} and R^{8b} are hydrogen and at least one of the other substituents is different from hydrogen, preferably such that three of the substituents R^{7a}, R^{7b}, R^{8a} and R^{8b} are hydrogen, and even more preferably such that three of the substituents R^{7a}, R^{7b}, R^{8a} and R^{8b} are hydrogen and the other substituent is a methyl group,
   n and m are independently of each other, based on a molar average, numbers of from 0 to 100 such that the sum n + m is of from 4 to 100, preferably of from 8 to 70, more preferably of from 10 to 60 and even more preferably of from 12 to 50,
   where in the case that R^{7a} and R^{7b} are both hydrogen, n is a number of from 4 to 100 and m is a number of from 0 to 50, preferably n is from 8 to 70 and m is from 0 to 30, more preferably n is from 10 to 60 and m is from 0 to 25 and even more preferably n is from 12 to 50 and m is from 0 to 20 and when m > 0, the ratio of n to m is larger than 1, preferably at least 2, more preferably at least 3 and even more preferably at least 4,
   where in the case that R^{8a} and R^{8b} are both hydrogen, m is a number of from 4 to 100 and n is a number of from 0 to 50, preferably m is from 8 to 70 and n is from 0 to 30, more preferably m is from 10 to 60 and n is from 0 to 25 and even more preferably m is from 12 to 50 and n is from 0 to 20 and when n > 0, the ratio of m to n is larger than 1, preferably at least 2, more preferably at least 3 and even more preferably at least 4,
   where in the case that both n and m are > 0, the respective units indexed with n and m are distributed block-wise, alternating, periodically and/or statistically;
      - T: is a linear or branched alkyl having 1 to 20 or hydrogen, preferably 1 to 4 carbon atoms and more preferably 1 carbon atom (methyl),
      - *: is the connecting site to another chemical unit of formula (ii-a) or formula (ii-b) or to the rest of the chemical structure of formula (I) or to the terminal residue T, wherein exactly one of * is a connecting site to the rest of the chemical structure of formula (I) or to the terminal residue T, and
      - #: is the connecting site to another chemical unit of formula (ii-a) or formula (ii-b) or to the terminal residue T or to the rest of the chemical structure of formula (I), wherein exactly one of # is a connecting site to the terminal residue T or to the rest of the chemical structure of formula (I); and
      - X: is represented by one of the following formulae (III) or (IV) 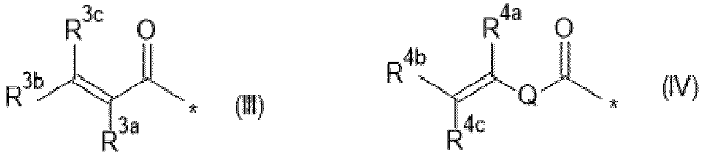
      wherein
      - Q: is linear or branched alkylene having 1 to 20, preferably 1 to 4 carbon atoms and more preferably 1 carbon atom (methylene, -CH₂-)
      - R^{3a}, R^{3b}, R^{3c}, R^{4a}, R^{4b} and R^{4c}: are each the same or different and are each independently selected from the group consisting of hydrogen, linear or branched alkyl having 1 to 20 and preferably 1 to 4 carbon atoms, and C₁- to C₄-alkylene carboxylic acid; and
      - *: is the connecting site to the rest of the structure of formula (I).

In one embodiment of the present invention, residue R^{II} is represented by the following formula (II): 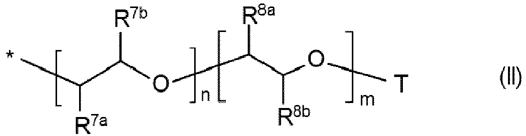 wherein
R^{7a}, R^{7b}, R^{8a}, R^{8b}, n, m nd T are defined as above and * is the connecting site to the rest of the structure of formula (I).

In a preferred embodiment, where in the case that both n and m are > 0, the respective chemical units indexed with n and m (e.g., of formulae (ii-a) and (ii-b)) are distributed block-wise, alternating, periodically and/or statistically. Optionally, one or more parts of the sequence may be block-wise and one or more other parts may be alternating, periodically and/or statistically.

In a preferred embodiment, in the case that both n and m are > 0, i.e. two different groups [CHR^{7a}CHR^{7b}O] and [CHR^{8a}CHR^{8b}O] such as [CH₂CH₂O] and [CH(CH₃)CH₂O] or [CH₂CH(CH₃)O] may exist in residue R^{II} or a group represented by the formula (II), they may be arranged block-wise, alternating, periodically and/or statistically, preferably block-wise and/or statistically (in the following, the groups [CH(CH₃)CH₂O] and [CH₂CH(CH₃)O] may be both generally designated as [C₃H₆O]. This means that in residue R^{II} or a group represented by the formula (II), the groups [CHR^{7a}CHR^{7b}O] and [CHR^{8a}CHR^{8b}O], and e.g. the groups [CH₂CH₂O] and [C₃H₆O], may be arranged, for example, in a purely statistically or block-wise form but may also be arranged in a form which could be considered as both statistical and block-wise, e.g. small blocks of the groups [CH₂CH₂O] and [C₃H₆O] arranged in a statistical manner, or in a form wherein adjacent instances of statistical and block-wise arrangements of the groups [CH₂CH₂O] and [C₃H₆O] exist.

Any of the groups [CHR^{7a}CHR^{7b}O] and [CHR^{8a}CHR^{8b}O], e.g. any of the groups [CH₂CH₂O] and [C₃H₆O], can be linked to -T in residue R^{II} or formula (II) and to O- in formula (I). This means, for example, that both, -T in formula (II) and O- in formula (I), may be connected to a [CH₂CH₂O] group, they may both be connected to a [C₃H₆O] group or they may be connected to different groups selected from [CH₂CH₂O] and [C₃H₆O].

In case that one (co)polymer of the invention comprises two or more macromonomeric structural units derived from one or more macromonomers, the macromonomeric structural units may optionally be different.

In a preferred embodiment, the macromonomer according to the present invention is characterized in that:
- R¹: is methyl;
- Z: is methylene;
- R²: is represented by residue R^{II},
wherein
- R^{7a} and R^{7b}: are different, one of them is hydrogen and the other one is methyl,
- R^{8a} and R^{8b}: are both hydrogens,
- m: is a number of from 4 to 100, preferably from 8 to 70, more preferably from 10 to 60 and even more preferably from 12 to 50,
- n: is a number of from 0 to 50, preferably from 0 to 30, more preferably from 0 to 25 and even more preferably from 0 to 20,
wherein when n > 0, and
the ratio of m to n is larger than 1, preferably at least 2, more preferably at least 3 and even more preferably at least 4;
- T: is methyl;
- X: is represented by one of formulae (III) or (IV) 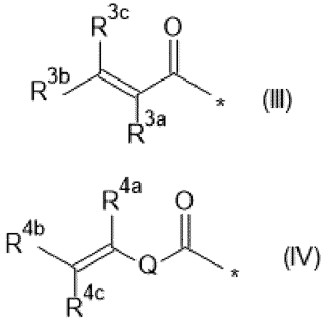
wherein
R^{3a}, R^{3b} and R^{3c} are defined as follows:
(a) R^{3a}, R^{3b} and R^{3c} are each hydrogen,
(b) R^{3a} and R^{3b} are each hydrogen, and
   R^{3c} is -COO^{- 1}/ₓM^{x+}, wherein
   ¹/ₓ M^{x+} is a cation, wherein M is an ion with the ion charge x, preferably selected from the group consisting of monovalent cations M⁺ (x = 1), divalent cations ½ M²⁺ (x = 2) and trivalent cations ⅓ M³⁺ (x = 3) and more preferably selected from the group consisting of H⁺, Li⁺, Na⁺, K⁺, ½ Mg²⁺,
   ½ Ca²⁺, ⅓ Al³⁺ and NH₄⁺, or
(c) R^{3a} is -CH₂COO^{- 1}/ₓM^{x+} methylene carboxylic acid, wherein
   ¹/ₓ M^{x+} is a cation, wherein M is an ion with the ion charge x, preferably selected from the group consisting of monovalent cations M⁺ (x = 1), divalent cations ½ M²⁺ (x = 2) and trivalent cations ⅓ M³⁺ (x = 3) and more preferably selected from the group consisting of H⁺, Li⁺, Na⁺, K⁺, ½ Mg²⁺, ½ Ca²⁺, ⅓ Al³⁺ and NH₄⁺, and
   R^{3b} and R^{3c} are each hydrogen; and
wherein
R^{4a}, R^{4b} and R^{4c} are defined as follows:
(a) R^{4a}, R^{4b}, R^{4c} and Q are as defined according to the present invention;
(b) R^{4a} is -COO^{- 1}/ₓM^{x+}, wherein¹/ₓ M^{x+} is a cation, wherein M is an ion with the ion charge x, preferably selected from the group consisting of monovalent cations M⁺ (x = 1), divalent cations ½ M²⁺ (x = 2) and trivalent cations ⅓ M³⁺ (x = 3) and more preferably selected from the group consisting of H⁺, Li⁺, Na⁺, K⁺, ½ Mg²⁺, ½ Ca²⁺, ⅓ Al³⁺ and NH₄⁺, and
   R^{4b} and R^{4c} are each hydrogen; and
   Q is methylene.

The macromonomer of the present invention may be used for various purposes. It was found that it may be used very well for preparing a (co)polymer.

Accordingly, a further aspect of the present invention relates to a (co)polymer comprising or consisting of one or more types of macromonomeric structural units derived from one or more macromonomers of the present invention as component a).

In one preferred embodiment of the present invention, the (co)polymer is characterized in that it comprises, in addition to the component a), component b), wherein component b) comprises one or more cationic structural units that are each derived from one or more cationic monomers of the following formulae (V) and/or (VI): 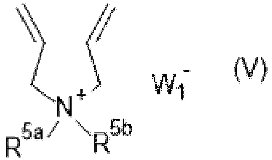 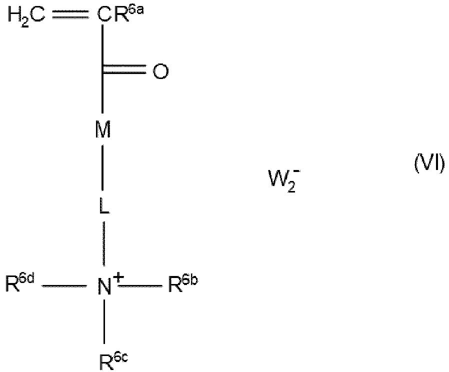 wherein
- R^{5a} and R^{6a}: are each the same or different and are each independently selected from the group consisting of hydrogen and methyl,
- R^{5b}, R^{6b}, R^{6c} and R^{6d}: are each the same or different and are each independently selected from the group consisting of an aliphatic hydrocarbyl radical having 1 to 20 and preferably 1 to 4 carbon atoms, hydrogen, a cycloaliphatic hydrocarbyl radical having 5 to 20 and preferably 5 to 8 carbon atoms, an aryl radical having 6 to 14 carbon atoms, and polyethylene glycol (PEG), preferably wherein the residues are each the same or different and are each independently selected from the group consisting of hydrogen and methyl, in particular are each methyl,
- M is: the same or different and is represented by NH, oxygen, and/or NR^{6b},
- L is: the same or different and is represented by -(CH₂)ₓ-, 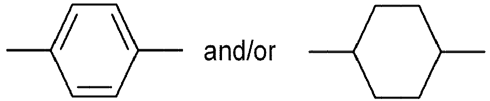
- x: is the same or different and is represented by an integer from 1 to 6, in particular 2.
- W₁ and W₂: are each the same or different and are each independently selected from a halogen, C₁- to C₄-alkylsulfate and C₁- to C₄-alkylsulfonate,
preferably wherein the cationic structural units of component b) comprise one or more residues derived from one or more cationic monomers selected from the group consisting of [3-(acryloylamino)propyl] trimethylammonium chloride, [2-(acryloyloxy)ethyl]trimethylammonium chloride, [2-(acryloylamino)ethyl]trimethylammonium chloride, [2-(acryloyloxy)ethyl]trimethylammonium methosulfate, [2-(methacryloyloxy)ethyl]trimethylammonium chloride or methosulfate, [3-(methacryloylamino)propyl]trimethylammonium chloride and diallyldimethylammonium chloride (DADMAC), more preferably selected from the group consisting of [3-(acryloylamino)propyl]trimethylammonium chloride, [3-(methacryloylamino)propyl]trimethylammonium chloride and diallyldimethylammonium chloride, and in particular selected from the group consisting of [3-(methacryloylamino)propyl]trimethylammonium chloride and diallyldimethylammonium chloride.

In this preferred embodiment of the present invention, the (co)polymers of the present invention comprises or consists of:
a) from 0.1 to 99.9 mol-%, more preferably from 0.5 to 30 mol-% and even more preferably from 1 to 10 mol-% of one or more structural units of component a), and
b) from 0.1 to 99.9 mol-%, more preferably from 70 to 99.5 mol-% and even more preferably from 90 to 99 mol-% of one or more structure units of component b),
wherein the mole percentages mentioned for components a) and b) in each case are based on the sum of the moles of the components a) and b) of the (co)polymer.

The weight content of the sum of components a) and b) is preferably more than 50 wt.-%, more preferably more than 60 wt.-%, and even more preferably more than 75 wt.-%, based on the weight of the whole (co)polymer.

In another preferred embodiment of the present invention, the (co)polymer, in addition to the structural units of components a) and b), comprises one or more structural units of component c) which differ from the structural units of components a) and b).

Preferably, the one or more structural units of component c) present in the (co)polymer are derived from the one or more monomers selected from the group consisting of acrylic acid, methacrylic acid, maleic acid, maleic anhydride, itaconic acid and itaconic anhydride.

In this preferred embodiment of the present invention, the (co)polymer is characterized in that it comprises or consists of:
a) one or more types of macromonomeric structural units derived from one or more macromonomers of the present invention as component a);
b) one or more types of cationic structural units as component b) as defined in according to the present invention, which differ from the structural units of component a); and
c) one or more types of structural units as component c) which differ from the structural units of components a) and b), in particular wherein the one or more structural units of component c) are derived from the one or more monomers selected from the group consisting of acrylic acid, methacrylic acid, maleic acid, maleic anhydride, itaconic acid and itaconic anhydride,
preferably wherein the copolymer comprises or consists of:
a) from 0.1 to 99.8 mol-%, preferably from 0.5 to 75 mol-% and more preferably from 1 to 30 mol-% of one or more structural units of component a),
b) from 0.1 to 99.8 mol-%, preferably from 20 to 94.5 mol-% and more preferably from 50 to 79 mol-% of one or more structure units of component b),
c) from 0.1 to 99.8 mol-%, preferably from 5 to 79.5 mol-% and more preferably from 20 to 49 mol-% of one or more structural units of component c)
wherein the mole percentages mentioned for components a), b) and c) in each case are based on the sum of the moles of the components a), b) and c) of the copolymer.

The weight of the components a), b) and c) is preferably more than 70 wt.-%, more preferably more than 75 wt.-% and even more preferably more than 85 wt.-%, based on the weight of the whole (co)polymer.

Preferably, the structural units of components a) and b), and, if present, component c) of the (co)polymer are present in the (co)polymer in a random, block-wise, alternating or gradient distribution.

Preferably, the weight average molecular weight M_{w} of the (co)polymer is from 10 000 to 250 000 g/mol, more preferably from 15 000 to 200 000 g/mol and even more preferably from 20 000 to 150 000 g/mol. According to the present invention, a weight average molecular weight M_{w} may be determined by any means. Preferably, as used herein, the weight-average molecular weights are determined with gel permeation chromatograph (GPC) following the OECD Guideline for Testing of Chemicals 118 (1996) DIN 55672-1 (1955). GPC, gel permeation chromatography, is a special type of liquid chromatography in which the sample is separated according to the hydrodynamic volumes of the individual constituents. Detection is done by measuring refractive index. To attribute actual molecular weight values to the curve, it is necessary to calibrate the column by passing down polymers of known molecular weight. The calibration before measuring the (co)polymers of the present invention is done with polyacrylic acid standards in the range from 1 250 - 1 020 000 Dalton. The columns used in the measurement are one PSS Suprema Guard (10 µm, 50 mm × 8.0 mm ID), one PSS Suprema 100 Å (10 µm, 300 mm × 8.0 mm ID) and two PSS Suprema 3000 Å (10 µm, 300 mm × 8.0 mm ID). Polymer samples are prepared in 0.07 mol/L disodium hydrogen phosphate as a 5 g/L solution. 50 µL of the polymer solution is injected into the columns. A solution of 0.07 mol/L disodium hydrogen phosphate is used as eluent. The measurement is done at 23°C with the flow rate of 1 mL/min. PSS-WinGPC Version 8.2 is used to evaluate the measuring result.

It has been surprisingly found that the (co)polymers of the present invention may improve the performance of cleaning compositions.

Accordingly, a further aspect of the present invention relates to cleaning compositions comprising
Z1) one or more (co)polymers of the present invention,
Z2) one or more surfactants, and
Z3) water.

The cleaning compositions of the present invention have the advantage that they typically possess the property of preventing limescale build-up and to enable easier next time cleaning, in particular on hard surfaces.

The term "hard surface" in the context of the invention means a surface made from dimensionally fixed materials, for example made of plastic, ceramic, stone, for example natural stone, porcelain, glass, wood, linoleum and metal, for example stainless steel.

"Easier next time cleaning" within the context of the present invention means in particular that after applying a cleaning composition of the present invention, preferably an hard surface cleaner of the present invention and more preferably an toilet cleaner, to a hard surface, preferably a toilet, less effort is needed to clean the hard surface, preferably the toilet, in a next cleaning procedure, e.g. several days after the application of the cleaning composition of the present invention in the previous cleaning procedure, compared to the situation where a cleaning composition not comprising a (co)polymer of component Z1) of the cleaning compositions is applied in the previous cleaning procedure.

Cleaning compositions of the invention may bring about advantageous cleaning effects when employed on a hard surface.

Further advantages of the invention with regard to the hard surfaces on which cleaning compositions of the invention may have been employed may, for example, be as follows: re-soiling of the surfaces can be reduced and repeated cleaning of the surface can be facilitated. The treatment of a hard surface with cleaning compositions of the invention can advantageously remove grease residues and lime soap residues and can additionally advantageously also remove scale and reduce newly deposited scale. It can additionally minimize or prevent the formation of a biofilm on the surfaces and, in addition, the rinsing of the surfaces can be facilitated.

A further advantage of the present invention is that the (co)polymers of component Z1) of the cleaning compositions of the present invention are typically stable in the presence of peroxides or in the presence of hypochlorites.

Preferably, the cleaning compositions of the invention comprise:
Z1) the one or more (co)polymers of component Z1) in an amount from 0.001 to 10% by weight, preferably in an amount from 0.01 to 5% by weight and more preferably in an amount from 0.02 to 0.5% by weight, in each case based on the total weight of the cleaning composition, and or
Z2) the amount of the one or more surfactants of component Z2) is from 0.1 to 20% by weight and preferably from 0.1 to 10% by weight, in each case based on the total weight of the cleaning composition.

### Component Z2)

Preferably, the one or more surfactants of component Z2) of the cleaning compositions of the invention are selected from the group consisting of anionic surfactants, nonionic surfactants, amphoteric surfactants, cationic surfactants, and mixtures thereof.

The cleaning compositions of the invention may optionally comprise anionic surfactants, for example alkylbenzenesulfonates, alkyl sulfates, alkyl ether sulfates, alkanesulfonates, fatty acids, alkyl ether carboxylic acids, sulfosuccinates, isethionates, taurates, glycinates and/or acylglutamates. The alkyl chains of the surfactants mentioned may be of synthetic or natural origin and consist of 8 to 30, preferably 8 to 18 and more preferably 12 to 14 carbon atoms in a linear or branched arrangement.

Anionic surfactants that may be used in accordance with the invention are preferably aliphatic sulfates such as fatty alcohol sulfates, fatty alcohol ether sulfates, dialkyl ether sulfates, monoglyceride sulfates, and aliphatic sulfonates such as alkanesulfonates, olefinsulfonates, ether sulfonates, n-alkyl ether sulfonates, ester sulfonates and lignosulfonates. Likewise, usable in the context of the present invention are alkylbenzenesulfonates, fatty acid cyanamides, sulfosuccinates (sulfosuccinic esters), sulfosuccinamates, sulfosuccinamides, fatty acid isethionates, acylaminoalkanesulfonates (fatty acid taurides), fatty acid sarcosinates, ether carboxylic acids and alkyl (ether) phosphates, and also [alpha]-sulfo fatty acid salts, acylglutamates, monoglyceride disulfates and alkyl ethers of glycerol disulfate.

Among these, preference is given to the fatty alcohol sulfates and/or fatty alcohol ether sulfates, especially the fatty alcohol sulfates. Fatty alcohol sulfates are products of sulfation reactions on corresponding alcohols, while fatty alcohol ether sulfates are products of sulfation reactions on alkoxylated alcohols. The person skilled in the art generally understands alkoxylated alcohols to mean the reaction products of alkylene oxide, preferably ethylene oxide, with alcohols, in the context of the present invention preferably with longer-chain alcohols. In general, n moles of ethylene oxide and one mole of alcohol, depending on the reaction conditions, give rise to a complex mixture of addition products of different degrees of ethoxylation. A further embodiment of the alkoxylation involves the use of mixtures of alkylene oxides, preferably of the mixture of ethylene oxide and propylene oxide. Preferred fatty alcohol ether sulfates are the sulfates of fatty alcohols having low levels of ethoxylation with 1 to 4 ethylene oxide units (EO), especially 1 to 2 EO, for example 1.3 EO.

Particular preference is given to alkylbenzenesulfonate, alkanesulfonate, alkyl ether sulfate or alkyl sulfate.

The anionic surfactants may typically be used in the form of salts, but also in acid form. The salts are preferably alkali metal salts, alkaline earth metal salts, ammonium salts and mono-, di- or trialkanolammonium salts, for example mono-, di- or triethanolammonium salts, especially lithium, sodium, potassium or ammonium salts, more preferably sodium or potassium salts, especially preferably sodium salts.

Further surfactants may be non-ionic surfactants, amphoteric surfactants and/or cationic surfactants, for example betaines, amidobetaines, amine oxides, amidoamine oxides, fatty alcohol polyglycol ethers, alkyl polyglycosides, N-acylglucamines, preferably N-acyl-N-methylglucamines, or else quaternary ammonium compounds.

Further non-ionic surfactants may, for example, be alkoxylates, such as polyglycol ethers, fatty alcohol polyglycol ethers (fatty alcohol alkoxylates), alkyl phenol polyglycol ethers, end group-capped polyglycol ethers, mixed ethers and hydroxy mixed ethers, and fatty acid polyglycol esters. Likewise, usable are ethylene oxide-propylene oxide block (co)polymers and fatty acid alkanolamides and fatty acid polyglycol ethers. A further important class of non-ionic surfactants that can be used in accordance with the invention is that of the polyol surfactants and here particularly the glycosurfactants, such as alkyl polyglycosides, especially alkyl polyglucosides and N-acylglucamines, preferably N-acyl-N-methylglucamines.

Suitable fatty alcohol polyglycol ethers are ethylene oxide (EO)- and/or propylene oxide (PO)-alkoxylated, unbranched or branched, saturated or unsaturated C₈-C₂₂ alcohols having an alkoxylation level of up to 30, preferably ethoxylated C₁₀-C₁₈ fatty alcohols having an ethoxylation level of less than 30, more preferably 1 to 20, especially preferably 1 to 12 and exceptionally preferably 1 to 8, for example C₁₂-C₁₄ fatty alcohol ethoxylates with 8 EO.

Alkyl polyglycosides are surfactants that can be obtained by the reaction of sugars and alcohols by the relevant methods of preparative organic chemistry, which results in a mixture of monoalkylated, oligomeric or polymeric sugars according to the manner of preparation. Preferred alkyl polyglycosides are the alkyl polyglucosides, where the alcohol is more preferably a long-chain fatty alcohol or a mixture of long-chain fatty alcohols having branched or unbranched C₈- to C₁₈-alkyl chains and the oligomerization level (DP) of the sugars is from 1 to 10, preferably from 1 to 6, more preferably from 1.1 to 3 and especially preferably from 1.1 to 1.7, for example C₈-C₁₀-alkyl-1,5-glucoside (DP of 1.5).

The amphosurfactants (zwitterionic surfactants) that are usable in accordance with the invention include betaines, amine oxides, alkylamidoalkylamines, alkyl-substituted amino acids, acylated amino acids and biosurfactants.

Suitable betaines are the alkyl betaines, the alkylamidobetaines, the imidazolinium betaines, the sulfobetaines (name according to INCI: Sultaines; INCI: International Nomenclature of Cosmetic Ingredients) and the amidosulfobetaines, and the phosphobetaines. Examples of suitable betaines and sulfobetaines are the following compounds named according to INCI: Almondamidopropyl Betaine, Apricotamidopropylbetaine, Avocadamidopropylbetaine, Babassuamidopropylbetaine, Behenamidopropylbetaine, Behenylbetaine, Betaine, Canolamidopropylbetaine, Capryl/Capramidopropylbetaine, Carnitine, Cetylbetaine, Cocamidoethylbetaine, Cocamidopropylbetaine, Cocamidopropylhydroxysultaine, Cocobetaine, Cocohydroxysultaine, Coco/Oleamidopropylbetaine, Coco-Sultaine, Decylbetaine, Dihydroxyethyloleylglycinate, Dihydroxyethyl Soy Glycinate, Dihydroxyethylstearylglycinate, Dihydroxyethyl Tallow Glycinate, Dimethicone Propyl PG-Betaine, Erucamidopropylhydroxysultaine, Hydrogenated Tallow Betaine, Isostearamidopropylbetaine, Lauramidopropylbetaine, Laurylbetaine, Laurylhydroxysultaine, Laurylsultaine, Milkamidopropylbetaine, Minkamidopropylbetaine, Myristamidopropylbetaine, Myristylbetaine, Oleamidopropylbetaine, Oleamidopropylhydroxysultaine, Oleylbetaine, Olivamidopropylbetaine, Palmamidopropylbetaine, Palmitamidopropylbetaine, Palmitoyl Carnitine, Palm Kernelamidopropyl Betaine, Polytetrafluoroethylene Acetoxypropyl Betaine, Ricinoleamidopropylbetaine, Sesamidopropylbetaine, Soyamidopropylbetaine, Stearamidopropylbetaine, Stearylbetaine, Tallowamidopropylbetaine, Tallowamidopropylhydroxysultaine, Tallowbetaine, Tallowdihydroxyethylbetaine, Undecylenamidopropylbetaine and Wheat Germamidopropyl Betaine.

The amine oxides suitable in accordance with the invention include alkylamine oxides, especially alkyldimethylamine oxides, alkylamidoamine oxides and alkoxyalkylamine oxides.

Examples of suitable amine oxides are the following compounds named according to INCI: Almondamidopropylamine Oxide, Babassuamidopropylamine Oxide, Behenamine Oxide, Cocamidopropyl Amine Oxide, Cocamidopropylamine Oxide, Cocamine Oxide, Coco-Morpholine Oxide, Decylamine Oxide, Decyltetradecylamine Oxide, Diaminopyrimidine Oxide, Dihydroxyethyl C₈-C₁₀ Alkoxypropylamine Oxide, Dihydroxyethyl C₉-C₁₁ Alkoxypropylamine Oxide, Dihydroxyethyl C₁₂-C₁₅ Alkoxypropylamine Oxide, Dihydroxyethyl Cocamine Oxide, Dihydroxyethyl Lauramine Oxide, Dihydroxyethyl Stearamine Oxide, Dihydroxyethyl Tallowamine Oxide, Hydrogenated Palm Kernel Amine Oxide, Hydrogenated Tallowamine Oxide, Hydroxyethyl Hydroxypropyl C₁₂-C₁₅ Alkoxypropylamine Oxide, Isostearamidopropylamine Oxide, Isostearamidopropyl Morpholine Oxide, Lauramidopropylamine Oxide, Lauramine Oxide, Methyl Morpholine Oxide, Milkamidopropyl Amine Oxide, Minkamidopropylamine Oxide, Myristamidopropylamine Oxide, Myristamine Oxide, Myristyl/Cetyl Amine Oxide, Oleamidopropylamine Oxide, Oleamine Oxide, Olivamidopropylamine Oxide, Palmitamidopropylamine Oxide, Palmitamine Oxide, PEG-3 Lauramine Oxide, Potassium Dihydroxyethyl Cocamine Oxide Phosphate, Potassium Trisphosphonomethylamine Oxide, Sesamidopropylamine Oxide, Soyamidopropylamine Oxide, Stearamidopropylamine Oxide, Stearamine Oxide, Tallowamidopropylamine Oxide, Tallowamine Oxide, Undecylenamidopropylamine Oxide and Wheat Germamidopropylamine Oxide.

Illustrative alkylamidoalkylamines are the following compounds named according to INCI: Cocoamphodipropionic Acid, Cocobetainamido Amphopropionate, DEA-Cocoamphodipropionate, Disodium Caproamphodiacetate, Disodium Caproamphodipropionate, Disodium Capryloamphodiacetate, Disodium Capryloamphodipropionate, Disodium Cocoamphocarboxyethylhydroxypropylsulfonate, Disodium Cocoamphodiacetate, Disodium Cocoamphodipropionate, Disodium Isostearoamphodiacetate, Disodium Isostearoamphodipropionate, Disodium Laureth-5 Carboxyamphodiacetate, Disodium Lauroamphodiacetate, Disodium Lauroamphodipropionate, Disodium Oleoamphodipropionate, Disodium PPG-2-Isodeceth-7 Carboxyamphodiacetate, Disodium Stearoamphodiacetate, Disodium Tallowamphodiacetate, Disodium Wheatgermamphodiacetate, Lauroamphodipropionic Acid, Quaternium-85, Sodium Caproamphoacetate, Sodium Caproamphohydroxypropylsulfonate, Sodium Caproamphopropionate, Sodium Capryloamphoacetate, Sodium Capryloamphohydroxypropylsulfonate, Sodium Capryloamphopropionate, Sodium Cocoamphoacetate, Sodium Cocoamphohydroxypropylsulfonate, Sodium Cocoamphopropionate, Sodium Cornamphopropionate, Sodium Isostearoamphoacetate, Sodium Isostearoamphopropionate, Sodium Lauroamphoacetate, Sodium Lauroamphohydroxypropylsulfonate, Sodium Lauroampho PG-Acetate Phosphate, Sodium Lauroamphopropionate, Sodium Myristoamphoacetate, Sodium Oleoamphoacetate, Sodium Oleoamphohydroxypropylsulfonate, Sodium Oleoamphopropionate, Sodium Ricinoleoamphoacetate, Sodium Stearoamphoacetate, Sodium Stearoamphohydroxypropylsulfonate, Sodium Stearoamphopropionate, Sodium Tallamphopropionate, Sodium Tallowamphoacetate, Sodium Undecylenoamphoacetate, Sodium Undecylenoamphopropionate, Sodium Wheat Germamphoacetate and Trisodium Lauroampho PG-Acetate Chloride Phosphate.

Illustrative alkyl-substituted amino acids are the following compounds named according to INCI: Aminopropyl Laurylglutamine, Cocaminobutyric Acid, Cocaminopropionic Acid, DEA-Lauraminopropionate, Disodium Cocaminopropyl Iminodiacetate, Disodium Dicarboxyethyl Cocopropylenediamine, Disodium Lauriminodipropionate, Disodium Steariminodipropionate, Disodium Tallowiminodipropionate, Lauraminopropionic Acid, Lauryl Aminopropylglycine, Lauryl Diethylenediaminoglycine, Myristaminopropionic Acid, Sodium C₁₂-C₁₅ Alkoxypropyl Iminodipropionate, Sodium Cocaminopropionate, Sodium Lauraminopropionate, Sodium Lauriminodipropionate, Sodium Lauroyl Methylaminopropionate, TEA-Lauraminopropionate and TEA-Myristam inopropionate.

More preferably, the one or more surfactants of component Z2) of the cleaning compositions of the invention are selected from the group consisting of fatty alcohol polyglycol ethers, alkyl polyglycosides, alkylbenzenesulfonates, alkanesulfonates, alkyl ether sulfates, alkyl sulfates, N-acylglucamines, preferably N-acyl-N-methylglucamines, quaternary ammonium compounds, and mixtures thereof.

The amount of the one or more surfactants of component Z2) in the cleaning compositions of the invention is preferably from 0.1 to 20% by weight and more preferably from 0.1 to 10% by weight, in each case based on the total weight of the cleaning composition of the invention.

### Component Z3)

Preferably, the amount of water in the cleaning compositions of the invention may add up to 100% by weight of the cleaning compositions. The proportion of water in the cleaning compositions of the invention is preferably from 30 to 99.8% by weight, more preferably from 40 to 95% by weight and especially preferably from 70 to 90% by weight, based in each case on the total weight of the cleaning compositions of the invention.

Preferably, the cleaning compositions of the invention comprise, in addition to the one or more (co)polymers of component Z1), the one or more surfactants of component Z2) and water of component Z3), one or more further substances selected from components Z4), Z5), Z6) and/or Z7):
Z4) one or more pH regulators as component Z4),
Z5) one or more complexing agents as component Z5),
Z6) one or more solvents other than water as component Z6),
Z7) one or more further additives, preferably selected from the group consisting of viscosity regulators (thickeners), enzymes, bleaches, preservatives, fragrances and dyes, as component Z7),
and the pH of the cleaning composition is preferably from 1 to 14 and more preferably from 3 to 13.

### Component Z4)

A pH regulator of component Z4) may adjust the pH of the entire cleaning composition to basic (pH > 7), neutral (pH = 7) or acidic (pH < 7). Both acids and bases can be used as pH regulators.

The acids may be inorganic acids, for example hydrochloric acid, sulfuric acid, nitric acid, amidosulfonic acid and/or phosphoric acid.

In a preferred embodiment of the invention, the acids present are organic acids, more preferably non-complexing acids such as lactic acid, formic acid, acetic acid, glycolic acid and/or gluconic acid. Further preferred acids are malic acid, citric acid, tartaric acid, adipic acid and/or succinic acid. In a preferred embodiment, the cleaning compositions of the invention comprise an acid. In a further preferred embodiment of the invention, the cleaning compositions of the invention comprise a mixture of two or more acids.

The amount of acid used, if it is not 0%, is preferably from 0.1 to 10% by weight, more preferably from 0.2 to 5% by weight and especially preferably from 1 to 3% by weight, based in each case on the total weight of the cleaning composition of the invention.

In a further preferred embodiment of the invention, for buffering of the pH, it is also possible to add a salt of an acid, especially the sodium, potassium or magnesium salt, but also further alkali metal or alkaline earth metal salts or else ammonium salts, especially of volatile amines such as monoethanolamine, ammonia, diethanolamine or else triethanolamine.

The bases are usually used to adjust the cleaning composition to basic (pH > 7). In a preferred embodiment of the invention, the bases are selected from the group consisting of sodium hydroxide, potassium hydroxide, sodium carbonate, potassium carbonate, ammonia, and mixtures thereof, and preferably from the group consisting of sodium hydroxide, potassium hydroxide and mixtures thereof.

In a preferred embodiment, the cleaning compositions of the invention comprise a base. In a further preferred embodiment of the invention, the cleaning compositions of the invention comprise a mixture of two or more bases.

The amount of base used, if it is not 0%, is preferably from 0.1 to 10% by weight, more preferably from 0.2 to 5% by weight and especially preferably from 1 to 3% by weight, based in each case on the total weight of the cleaning composition of the invention.

### Component Z5)

Suitable complexing agents of component Z5) are known to those skilled in the art and are described by way of example in DE-A-10 2009 001 559.

Complexing agents (INCI Chelating Agents), also called sequestrants, are ingredients able to complex and inactivate metal ions, in order to prevent their adverse effects on the stability or appearance of the compositions, for example cloudiness. It is firstly important to complex the calcium and magnesium ions of water hardness that are incompatible with numerous ingredients. The complexation of the ions of heavy metals such as iron or copper secondly delays the oxidative breakdown of the finished compositions. Moreover, the complexing agents promote detergent action.

Suitable examples are the following complexing agents named according to INCI: Aminotrimethylene, Phosphonic Acid, Beta-Alanine Diacetic Acid, Calcium Disodium EDTA, Citric Acid, Cyclodextrin, Cyclohexanediamine Tetraacetic Acid, Diammonium Citrate, Diammonium EDTA, Diethylenetriamine Pentamethylene Phosphonic Acid, Dipotassium EDTA, Disodium Azacycloheptane Diphosphonate, Disodium EDTA, Disodium Pyrophosphate, EDTA, Etidronic Acid, Galactaric Acid, Gluconic Acid, Glucuronic Acid, HEDTA, Hydroxypropyl Cyclodextrin, Methyl Cyclodextrin, Pentapotassium Triphosphate, Pentasodium Aminotrimethylene Phosphonate, Pentasodium Ethylenediamine Tetramethylene Phosphonate, Pentasodium Pentetate, Pentasodium Triphosphate, Pentetic Acid, Phytic Acid, Potassium Citrate, Potassium EDTMP, Potassium Gluconate, Potassium Polyphosphate, Potassium Trisphosphonomethylamine Oxide, Ribonic Acid, Sodium Chitosan Methylene Phosphonate, Sodium Citrate, Sodium Diethylenetriamine Pentamethylene Phosphonate, Sodium Dihydroxyethylglycinate, Sodium EDTMP, Sodium Gluceptate, Sodium Gluconate, Sodium Glycereth-1 Polyphosphate, Sodium Hexametaphosphate, Sodium Metaphosphate, Sodium Metasilicate, Sodium Phytate, Sodium Polydimethylglycinophenolsulfonate, Sodium Trimetaphosphate, TEA-EDTA, TEA-Polyphosphate, Tetrahydroxyethyl Ethylenediamine, Tetrahydroxypropyl Ethylenediamine, Tetrapotassium Etidronate, Tetrapotassium Pyrophosphate, Tetrasodium EDTA, Tetrasodium Etidronate, Tetrasodium Pyrophosphate, Tripotassium EDTA, Trisodium Dicarboxymethyl Alaninate, Trisodium EDTA, Trisodium HEDTA, Trisodium NTA and Trisodium Phosphate.

The proportion of component Z5) in the cleaning composition of the invention, if it is not 0%, is preferably from 0.1 to 10% by weight, more preferably from 0.1 to 3.0% by weight and especially preferably from 0.1 to 1.0% by weight, based in each case on the total weight of the cleaning composition of the invention.

### Component Z6)

Suitable water-miscible solvents of component Z6) are known to those skilled in the art and are described by way of example in US-A 2005/0239674. Preference is given to using alcohols, glycerol, glycols and glycol ethers, preferably lower alcohols such as ethanol, isopropanol, butanol, isobutanol, or alkylene glycols, e.g. propylene glycol, and also glycol ethers, e.g. ethylene glycol n-butyl ether or propylene glycol n-butyl ether.

In a preferred embodiment, mixtures of two or more solvents are used.

The proportion of component Z6) in the cleaning composition of the invention, if it is not 0%, is preferably from 0.1 to 10% by weight, more preferably from 0.1 to 3% by weight and especially preferably from 0.5 to 1.5% by weight.

### Component Z7)

Suitable additives of component Z7) are further customary ingredients of detergents, for example disinfectants, dyes, fragrances, buffers, viscosity regulators, corrosion inhibitors, organic and inorganic salts, optical brighteners, bleaches, antioxidants, opacifiers, hydrotropes, abrasives, preservatives, oxidizing agents, insecticides and/or other polymers.

According to the invention, it is possible to add bleaches to the composition. Suitable bleaches include peroxides, peracids and/or perborates or hypochlorites.

Peroxides, preferably H₂O₂, are only suitable in acidic cleaning compositions. If a cleaning composition contains peroxides, the peroxides content is preferably from 0.1 to 10% by weight, more preferably from 0.1 to 8% by weight and even more preferably from 0.1 to 5% by weight, based in each case on the total weight of the cleaning composition of the invention.

In a preferred embodiment of the invention, the cleaning compositions of the present invention comprise peroxides, preferably H₂O₂, preferably in an amount from 0.1 to 10% by weight, more preferably in an amount from 0.1 to 8% by weight and even more preferably in an amount from 0.1 to 5% by weight, in each case based on the total weight of the cleaning composition. An advantage of the present invention is that the (co)polymers of component Z1) of the cleaning compositions of the present invention are stable in the presence of peroxides, preferably H₂O₂.

Hypochlorites, preferably sodium hypochlorite, are only suitable in basic cleaning compositions. If a cleaning composition contains hypochlorites, the hypochlorites content is preferably from 0.5 to 6% by weight and more preferably from 1 to 5% by weight, based in each case on the total weight of the cleaning composition of the invention.

In a preferred embodiment of the invention, the cleaning compositions of the present invention further comprise hypochlorite, preferably sodium hypochlorite, preferably in an amount from 0.5 to 6% by weight and more preferably in an amount from 1 to 5% by weight, in each case based on the total weight of the cleaning composition.

An advantage of the present invention is that the (co)polymers of component Z1) of the cleaning compositions of the present invention are comparably stable in the presence of hypochlorite, preferably sodium hypochlorite as experimentally found.

The cleaning compositions of the invention may also optionally comprise enzymes, preferably proteases, lipases, amylases, hydrolases and/or cellulases. They can be added to the cleaning compositions of the invention in any form established in the prior art. In the case of the cleaning compositions of the invention in liquid or gel form, these especially include solutions of the enzymes, advantageously in maximum concentration, with a low water level and/or with added stabilizers. Alternatively, the enzymes can be encapsulated, for example by spray-drying or extrusion of the enzyme solution together with a preferably natural polymer or in the form of capsules, for example those in which the enzymes are enclosed as in a solidified gel or in those of the core-shell type in which an enzyme-containing core has been coated with a water-, air- and/or chemical-impervious protective layer. In coating layers, it is additionally possible to apply further active ingredients, for example stabilizers, emulsifiers, pigments, bleaches or dyes. Capsules of this kind are applied by methods known per se, for example by agitated or roller granulation or in fluidized bed processes. Advantageously, granules of this kind have a low dust level, for example through application of polymeric film formers, and are storage-stable on account of the coating.

In addition, it is possible for enzyme stabilizers to be present in enzyme-containing cleaning compositions of the invention, in order to protect any enzyme present in a cleaning composition of the invention from damage, for example inactivation, denaturation or breakdown, for instance as a result of physical effects, oxidation or proteolytic cleavage. Suitable enzyme stabilizers, depending in each case on the enzyme used, are especially: benzamidine hydrochloride, borax, boric acids, boronic acids or the salts or esters thereof, in particular derivatives having aromatic groups, for instance substituted phenylboronic acids or the salts or esters thereof; peptide aldehydes (oligopolypeptides with a reduced C terminus), amino alcohols such as mono-, di-, triethanol- and -propanolamine and mixtures thereof, aliphatic carboxylic acids up to C₁₂, such as succinic acid, other dicarboxylic acids or salts of the acids mentioned; and end group-capped fatty acid amide alkoxylates; lower aliphatic alcohols and in particular polyols, for example glycerol, ethylene glycol, propylene glycol or sorbitol; and reducing agents and antioxidants such as sodium sulfite and reducing sugars. Further suitable stabilizers are known from the prior art.

Preference is given to using combinations of stabilizers, for example the combination of polyols, boric acid and/or borax, the combination of boric acid or borate, reducing salts and succinic acid or other dicarboxylic acids, or the combination of boric acid or borate with polyols or polyamino compounds and with reducing salts.

Disinfectants and/or preservatives suitable in accordance with the invention are, for example, active antimicrobial ingredients from the groups of the alcohols, aldehydes, antimicrobial acids and salts thereof, carboxylic esters, acid amides, phenols, phenol derivatives, diphenyls, diphenylalkanes, urea derivatives, oxygen and nitrogen acetals and formals, benzamidines, isothiazoles and derivatives thereof such as isothiazolines and isothiazolinones, phthalimide derivatives, pyridine derivatives, antimicrobial surface-active compounds, guanidines, antimicrobial amphoteric compounds, quinolines, 1,2-dibromo-2,4-dicyanobutane, iodo-2-propynyl butyl carbamate, iodine, iodophors and peroxides. Preferred active antimicrobial ingredients are preferably selected from the group comprising ethanol, n-propanol, i-propanol, butane-1,3-diol, phenoxyethanol, 1,2-propylene glycol, glycerol, undecylenoic acid, citric acid, lactic acid, benzoic acid, salicylic acid, thymol, 2-benzyl-4-chlorophenol, 2,2'-methylenebis(6-bromo-4-chlorophenol), 2,4,4'-trichloro-2'-hydroxydiphenyl ether, N-(4-chlorophenyl)-N-(3,4-dichlorophenyl)urea, N,N'-(1,10-decanediyldi-1-pyridinyl-4-ylidene)bis(1-octanamine) dihydrochloride, N,N'-bis(4-chlorophenyl)-3,12-diimino-2,4,11,13-tetraazatetradecanediimide amide, antimicrobial quaternary surface-active compounds, guanidines. Preferred antimicrobial surface-active quaternary compounds contain an ammonium, sulfonium, phosphonium, iodonium or arsonium group, as described, for example, by K. H. Wallhäusser in "Praxis der Sterilisation, Desinfektion - Konservierung: Keimidentifizierung - Betriebshygiene" [Practical Sterilization, Disinfection - Preservation: Microbe Identification - Commercial Hygiene] (5th edition - Stuttgart; New York: Thieme, 1995).

In the context of the invention, the terms "disinfection", "sanitation", "antimicrobial action" and "active antimicrobial ingredient" have the meaning customary in the art, as reflected, for example, by K. H. Wallhäusser in "Praxis der Sterilisation, Desinfektion - Konservierung: Keimidentifizierung - Betriebshygiene" (5th edition - Stuttgart; New York: Thieme, 1995). While disinfection in the narrower sense of medical practice means the killing of theoretically all infection germs, sanitation is the maximum elimination of all germs - including the saprophytic germs that are normally harmless to man.

Polyacrylic and polymethacrylic compounds may be used as thickeners. Usable polyacrylic and polymethacrylic compounds may include, for example, high molecular weight homopolymers of acrylic acid that have been crosslinked with a polyalkenyl polyether, especially an allyl ether of sucrose, pentaerythritol or propylene (INCI name according to International Dictionary of Cosmetic Ingredients from The Cosmetic, Toiletry, and Fragrance Association (CTFA): Carbomer), which are also referred to as carboxyvinyl polymers. In addition, these also include the following acrylic acid (co)polymers:
(i) (co)polymers of two or more monomers from the group of acrylic acid, methacrylic acid and the simple esters thereof, preferably formed with C₁-₄-alkanols (INCI Acrylates (co)polymer), which include, for instance, (co)polymers of methacrylic acid, butyl acrylate and methyl methacrylate (CAS designation according to Chemical Abstracts Service: 25035-69-2) or of butyl acrylate and methyl methacrylate (CAS 25852-37-3);
(ii) crosslinked high molecular weight acrylic acid (co)polymers, which include, for instance, (co)polymers of C₁₀₋₃₀-alkyl acrylates that have been crosslinked with an allyl ether of sucrose or pentaerythritol and have one or more monomers from the group of acrylic acid, methacrylic acid and simple esters thereof, preferably formed with C₁-C₄-alkanols (INCI Acrylates/C₁₀-C₃₀ Alkyl Acrylate Crosspolymer).

Further thickeners are the polysaccharides and heteropolysaccharides, especially the polysaccharide gums, for example, gum arabic, agar, alginates, carrageenans and salts thereof, guar, guaran, tragacanth, gellan, ramsan, dextran or xanthan and derivatives thereof, e.g. propoxylated guar, and mixtures thereof. Other polysaccharide thickeners, such as starches or cellulose derivatives, can be used as an alternative to, but preferably in addition to, a polysaccharide gum, for example starches from a wide variety of different origins and starch derivatives, e.g. hydroxyethyl starch, starch phosphate esters or starch acetates, or carboxymethyl cellulose or the sodium salt thereof, methyl cellulose, ethyl cellulose, hydroxyethyl cellulose, hydroxypropyl cellulose, hydroxypropyl methyl cellulose or hydroxyethyl methyl cellulose or cellulose acetate.

Particularly preferred polysaccharide thickeners are microbial anionic heteropolysaccharide xanthan gums, which are produced by Xanthomonas campestris and some other species under aerobic conditions with a molecular weight of 2-15 × 10⁶.

Thickeners used may also be sheet silicates. These include, for example, magnesium or sodium-magnesium sheet silicates.

The amount of viscosity regulator, if it is not 0%, is preferably up to 0.5% by weight, more preferably from 0.001 to 0.3% by weight, especially preferably from 0.01 to 0.2% by weight and exceptionally preferably from 0.01 to 0.15% by weight, based in each case on the total weight of the cleaning composition of the invention. The viscosity of the cleaning composition of the invention is preferably from 0.4 to 400 m•Pas.

In addition, the cleaning compositions of the invention may comprise one or more corrosion inhibitors.

Suitable corrosion inhibitors (INCI Corrosion Inhibitors) are, for example, the following substances named according to INCI: Cyclohexylamine, Diammonium Phosphate, Dilithium Oxalate, Dimethylamino Methylpropanol, Dipotassium Oxalate, Dipotassium Phosphate, Disodium Phosphate, Disodium Pyrophosphate, Disodium Tetrapropenyl Succinate, Hexoxyethyl Diethylammonium, Phosphate, Nitromethane, Potassium Silicate, Sodium Aluminate, Sodium Hexametaphosphate, Sodium Metasilicate, Sodium Molybdate, Sodium Nitrite, Sodium Oxalate, Sodium Silicate, Stearamidopropyl Dimethicone, Tetrapotassium Pyrophosphate, Tetrasodium Pyrophosphate and Triisopropanolamine.

Fragrances which may be used are individual odorant compounds, e.g. the synthetic products of the ester, ether, aldehyde, ketone, alcohol and hydrocarbon types. Odorant compounds of the ester type are, for example, benzyl acetate, phenoxyethyl isobutyrate, p-tert-butylcyclohexyl acetate, linalyl acetate, dimethylbenzylcarbinyl acetate, phenylethyl acetate, linalyl benzoate, benzyl formate, ethylmethylphenyl glycinate, allyl cyclohexyl propionate, styrallyl propionate and benzyl salicylate. The ethers include, for example, benzyl ethyl ethers, the aldehydes include, for example, the linear alkanals having 8 to 18 carbon atoms, citral, citronellal, citronellyloxyacetaldehyde, hydroxycitronellal, lilial and bourgeonal, the ketones include, for example, the ionones, alpha-isomethylionone and methyl cedryl ketone, the alcohols include anethol, citronellol, eugenol, geraniol, linalool, phenylethyl alcohol and terpineol; and the hydrocarbons include primarily the terpenes and balsams. Preference is given to using mixtures of different odorants which together produce a pleasing scent note.

Fragrances used may also be natural odorant mixtures, as obtainable from vegetable or animal sources, e.g. pine oil, citrus oil, jasmine oil, lily oil, rose oil or ylang-ylang oil. Essential oils of relatively low volatility, which are usually used as aroma components, are also suitable as perfume oils, for example sage oil, chamomile oil, clove oil, melissa oil, mint oil, cinnamon leaf oil, linden blossom oil, juniper berry oil, vetiver oil, olibanum oil, galbanum oil and ladanum oil.

The amount of the fragrances in the cleaning compositions of the invention, if it is not 0%, is preferably from 0.001 to 2% by weight and more preferably from 0.01 to 2% by weight, based on the total weight of the cleaning compositions of the invention.

Any dyes and pigments present in the cleaning compositions of the invention, either organic or inorganic dyes, may be selected from the corresponding positive list from the Cosmetics Directive or the EU list of cosmetic colorants. Also advantageously used are pearlescent pigments, e.g. pearl essence (mixed guanine/hypoxanthine crystals from fish scales) and mother of pearl (ground seashells), monocrystalline pearlescent pigment, for example bismuth oxychloride (BiOCI), layer-substrate pigments, e.g. mica/metal oxide, silver-white pearlescent pigments composed of TiO₂, interference pigments (TiO₂, different layer thickness), color luster pigments (Fe₂O₃) and combination pigments (TiO₂/Fe₂O₃, TiO₂/Cr₂O₃, TiO₂/Prussian blue, TiO₂/carmine).

The amount of the dyes and pigments in the cleaning compositions of the invention, if it is not 0%, is preferably from 0.01 to 1.0% by weight, based on the total weight of the cleaning compositions of the invention.

In a preferred embodiment, if other polymers are used in component Z7), they may be selected from (co)polymers comprising polyalkylene oxide groups and quaternary nitrogen atoms. More preferably the other polymers of component Z7) are (co)polymers comprising
0.1 to 99.9 mol-%, preferably 20.0 to 80.0 mol-%, more preferably 22.0 to 77.6 mol-% of one or more cationic structural units (D); and
0.1 to 99.9 mol-%, preferably 0.4 to 20.0 mol-%, more preferably 0.5 to 4.4 mol-% of one or more macromonomeric structural units (E),
wherein the one or more cationic structural units (D) are represented by the following general formulae (XI) and/or (XII): 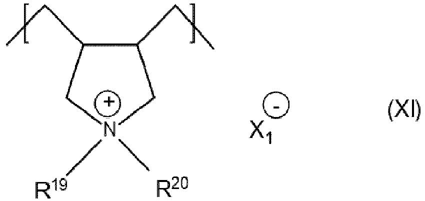 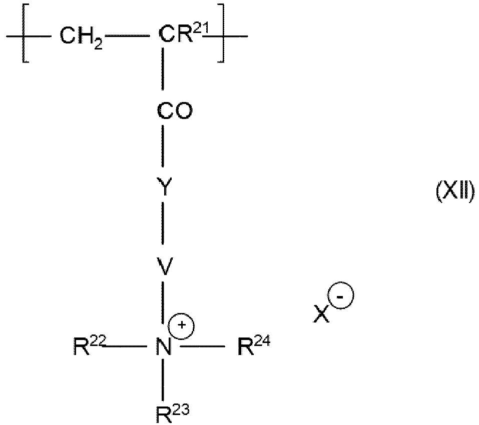 wherein
- R¹⁹ and R²¹: are equal or different and are independently selected from hydrogen and/or a methyl group;
- R²⁰, R²², R²³ and R²⁴: are equal or different and are independently selected from the group consisting of hydrogen, an aliphatic hydrocarbon residue having 1 to 20, preferably 1 to 4 carbon atoms, a cycloaliphatic hydrocarbon residue having 5 to 20, preferably 5 to 8 carbon atoms, an aryl group having 6 to 14 carbon atoms and/or polyethylene glycol (PEG), and preferably are equal or different and independently selected from the group consisting of hydrogen and/or methyl, and particularly preferably are methyl;
- Y: is the same or different and is selected from oxygen, NH and/or NR²²,
- V: is the same or different and is selected from -(CH₂)ₓ-, 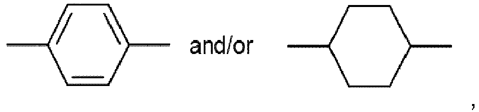
- x: is the same or different and is a number from 1 to 6;
- X and X₁: are equal or different and are independently selected from a halogen atom, C1 to C4-alkylsulfate and/or C1 to C4 alkylsulfonate; and
the one or more macromonomeric structural units (E) are represented by the following general formula (XIII): 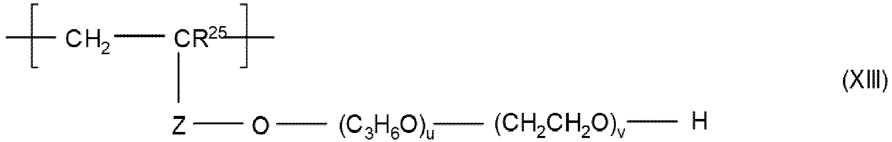 wherein
- R²⁵: is the same or different and is H and/or methyl;
- Z: is the same or different and is C=O and/or O(CH₂)₄, preferably O(CH₂)₄,
- u: is, on molar average, a number from 0 to 7, preferably from 0 to 6; and
- v: is, on molar average, a number from 1 to 150, preferably from 11 to 150, more preferably from 12 to 150.

In these other polymers the molar amounts of the structural units (D) and (E) are based on the total weight of these other polymers.

The other polymers comprising structural units (D) and (E) may preferably also comprise structural units resulting from the polymerization of further monomers such as further nonionic monomers, preferably amides and more preferably N,N-dimethyl acrylamide.

In a preferred embodiment, if other further polymers are used in component Z7), they may be selected from (co)polymers comprising components a), b) and c)
d) one or more structural units derived from one or more monomers comprising a sulfonic acid group or a sulfonate group, and
e) one or more structural units derived from one or more monomers comprising a carboxylic acid group or a carboxylate group, and
f) one or more structural units derived from one or more cationic monomers.

More preferably, the one or more structural units of component d) of these other polymers are derived from one or more monomers selected from the group consisting of vinyl sulfonic acid, styrene sulfonic acid, 2-acrylamido-2-methylpropane sulfonic acid, their corresponding sulfonates, and mixtures thereof.

More preferably, the one or more structural units of component e) of these other polymers are derived from one or more monomers selected from the group consisting of itaconic acid, methacrylic acid, acrylic acid, maleic acid, methyl maleic acid, their corresponding carboxylates, and mixtures thereof.

More preferably, the one or more structural units of component f) of these other polymers are derived from one or more cationic monomers selected from the group consisting of
[2-(acryloyloxy)ethyl]trimethylammonium salts,
[2-(methacryloyloxy)ethyl]trimethylammonium salts,
[2-(acryloylamino)ethyl]trimethylammonium salts,
[2-(methacryloylamino)ethyl]trimethylammonium salts,
[3-(acryloylamino)propyl]trimethylammonium salts,
[3-(methacryloylamino)propyl]trimethylammonium salts,
diallyldimethylammonium salts,
and mixtures thereof.

More preferably, the other further polymers of component Z7) are (co)polymers comprising 0.1 to 99 mol-%, preferably 15 to 30 mol-%, more preferably 20 to 27 mol-% of one or more structural units of component d); and 0.1 to 99 mol-%, preferably 60 to 80 mol-%, more preferably 65 to 77 mol-% of one or more structural units of component e); and 0.1 to 99 mol-%, preferably 0.5 to 15 mol-%, more preferably 1 to 10 mol-% of one or more structural units of component f), the mole percentages mentioned for components d), e) and f) in each case are based on the sum of the moles of the components d), e) and f) of these other further (co)polymer.

The proportion of component Z7) in the cleaning compositions of the invention, if it is not 0%, is preferably from 0.01 to 10% by weight, more preferably from 0.1 to 1% by weight and especially preferably from 0.1 to 0.5% by weight, based in each case on the total weight of the cleaning compositions of the invention.

In a preferred embodiment, the cleaning composition of the invention comprises or consists of:
Z1) 0.001 to 10% by weight of component Z1),
Z2) 0.1 to 20% by weight of component Z2),
Z3) an amount of component Z3) that adds up to 100% by weight of the cleaning compositions of the invention,
Z4) 0 to 10% by weight of component Z4),
Z5) 0 to 10% by weight of component Z5),
Z6) 0 to 10% by weight of component Z6), and
Z7) 0 to 10% by weight of component Z7),
based in each case on the total weight of the cleaning compositions of the invention.

As noted above, the cleaning composition of the present invention has particularly beneficial properties for cleaning hard surfaces and for reducing limescale.

Accordingly, a further aspect of the present invention relates to the use of a cleaning composition according to the present invention for the treatment of hard surfaces, preferably of ceramic, stone, porcelain, glass, stainless steel, metal, plastic, linoleum or wood, preferably for easier next time cleaning of hard surfaces, preferably in toilets.

The present invention further relates to the use of a at least one (co)polymer of the present invention for the treatment of hard surfaces, preferably of ceramic, stone, porcelain, glass, stainless steel, metal, plastic, linoleum or wood preferably for easier next time cleaning of hard surfaces, in particular in toilets, more preferably for preventing the build-up of limescale on hard surfaces, even more preferably in toilets, preferably wherein the cleaning composition is a toilet cleaner and the build-up of limescale in toilets is prevented on the surface of the toilet which is under the water line in the toilet.

The present invention further relates to the use of a cleaning composition according to the present invention for preventing the build-up of limescale on hard surfaces, preferably in toilets,
more preferably wherein the cleaning composition is a toilet cleaner and the build-up of limescale in toilets is prevented on the surface of the toilet which is under the water line in the toilet.

The cleaning compositions of the invention or the one or more (co)polymers of component Z1) of the cleaning compositions of the invention are advantageously suitable for treatment of hard surfaces, preferably of ceramic, stone, porcelain, glass, stainless steel, metal, plastic, linoleum or wood.

The present invention therefore also refers to the use of a cleaning composition of the invention or of at least one (co)polymer of component Z1) of the cleaning compositions of the invention for the treatment of hard surfaces, preferably of ceramic, stone, porcelain, glass, stainless steel, metal, plastic, linoleum or wood.

Preference is given to conducting the use of the invention for treatment of hard surfaces in order to achieve a cleaning effect on the hard surface on which the cleaning composition of the invention or the at least one (co)polymer of component Z1) of the cleaning compositions of the invention has been employed.

Preference is further given to conducting the use of the invention for treatment of hard surfaces in order to reduce the resoiling of a hard surface on which the cleaning composition of the invention or the at least one (co)polymer of component Z1) of the cleaning compositions of the invention has been employed.

Preference is further given to conducting the use of the invention for treatment of hard surfaces in order to facilitate the repeat cleaning of the hard surface on which the cleaning composition of the invention or the at least one (co)polymer of component Z1) of the cleaning compositions of the invention has been employed.

Preference is further given to conducting the use of the invention for treatment of hard surfaces in order to remove grease residues or lime soap residues on the hard surface on which the cleaning composition of the invention or the at least one (co)polymer of component Z1) of the cleaning compositions of the invention has been employed.

Preference is further given to conducting the use of the invention for treatment of hard surfaces in order to remove scale or to reduce newly deposited scale on the hard surface on which the cleaning composition of the invention or the at least one (co)polymer of component Z1) of the cleaning compositions of the invention has been employed.

Preference is further given to conducting the use of the invention for treatment of hard surfaces in order to minimize or prevent the formation of a biofilm on the hard surface on which the cleaning composition of the invention or the at least one (co)polymer of component Z1) of the cleaning compositions of the invention has been employed.

Preference is further given to conducting the use of the invention for treatment of hard surfaces in order to facilitate the rinsing of the hard surface on which the cleaning composition of the invention or the at least one (co)polymer of component Z1) of the cleaning compositions of the invention has been employed.

In a further preferred embodiment of the invention, the use of the invention for treatment of hard surfaces is conducted in such a way that the cleaning composition of the invention or the at least one (co)polymer of component Z1) of the cleaning compositions of the invention remains on the hard surface after application ("leave-on" application).

In a further preferred embodiment of the invention, the use of the invention for treatment of hard surfaces is conducted in such a way that the cleaning composition of the invention or the at least one (co)polymer of component Z1) of the cleaning compositions of the invention is removed from the hard surface after application and preferably rinsed off with water ("rinse-off" application).

The use of the invention for treatment of hard surfaces may e.g. be conducted for cleaning of hard surfaces in the kitchen and sanitary sector, for example in kitchens, bathrooms and toilets, in the household, but also in the industrial sector, for example in butchers' shops, slaughterhouses, dairies, storage tanks for food and drink products or industrial products, and in the public sector, for example building frontages, in swimming baths or in railway stations.

In a further preferred embodiment of the invention, the use of the invention for treatment of hard surfaces is conducted for cleaning of hard surfaces in the bathroom, hard surfaces in the kitchen, floors or toilets.

Toilets always have a little water in the bottom of them. Even after being flushed, they never empty completely. Some water is always trapped in a curved pipe at the base of the toilet known as the S-bend (or S-trap) and forms a water line in the toilet bowl. This amount of water effectively seals off the sewage pipe beneath it, stopping germs and malodor from being released into the bathroom. However, if the water present in the toilet is very hard, a layer of limescale build-up can always be seen, on the surface of the toilet which is under the water line in the toilet.

A further aspect of the present invention relates to a method of treating or cleaning a hard surface, which comprises contacting the hard surface with a cleaning composition of the invention or with at least one (co)polymer of component Z1) of the cleaning compositions of the invention.

The preferred embodiments specified above for the cleaning compositions of the invention are also applicable in a corresponding manner to the use of the cleaning compositions of the present invention of the invention or of the one or more (co)polymers of component Z1) of the cleaning compositions of the invention for treatment of hard surfaces, for easier next time cleaning of hard surfaces or for preventing the build-up of limescale on hard surfaces and to the method of the invention for treating or cleaning hard surfaces using a cleaning composition of the invention or at least one (co)polymer of component Z1) of the cleaning compositions of the invention.

The following abbreviations are used:
- Å: angstrom or angstroms
- ca.: circa
- g: gram or grams
- GPC: gel permeation chromatography
- ID: inside diameter
- mL: milliliter or milliliters
- mm: millimeter or millimeters
- mol-%: mole percentage
- wt.-%: weight percentage
- µm: micrometer or micrometers

The examples below are intended to illustrate the invention in detail without, however, limiting it thereto.

### Examples

### Example 1 - synthesis of macromonomer 1

In a 500 mL multi-necked flask equipped with a KPG-stirrer, reflux condenser and a thermometer, 200 g of Genamin M41 was heated under stirring (150 rpm) to 35°C. Afterwards, 11.21 g of itaconic acid anhydride was dosed as solid over a time period of 5 minutes into the reaction mixture. After the introduction of the itaconic acid anhydride, the temperature of the reaction mixture raised within 10 minutes to 50°C. In the last step, the reaction mixture was cooled down to room temperature (25°C) and stirred for additional 3 hours. The crude macromonomer 1 was used without further purification for the synthesis of other polymers.

### Example 2 - Synthesis of (co)polymer 2

In a 250 mL multi-necked flask equipped with a KPG-stirrer, a nitrogen supply, a reflux condenser and a thermometer, 22.73 g of demineralized water, 54.47 g of the crude macromonomer 1, 6.1 g of acrylic acid and 58.18 g of a 65 wt.-% aqueous diallyldimethylammoniumchloride solution (DADMAC) was homogenized under stirring (150 rpm) at room temperature (25°C). Afterwards, the reaction mixture was heated to 60°C and purged with nitrogen for 1 hour. In the next step, 3.52 g of 2,2'-azobis[2-(2-imidazolin-2-yl)propane]dihydrochloride (VA-44) solved in 18.00 g of demineralized water was dosed under a constant nitrogen flow, at 60°C, over a time period of 90 minutes into the reaction mixture. Thereafter, the reaction mixture was stirred at 60°C for additional 2 hours. After the end of the stirring time, 320.17 g of demineralized water were added at 60°C and the reaction mixture was cooled down to room temperature (25°C).

(co)polymer 2 consists of 7.5 mol-% of macromonomeric structural units derived from macromonomer 1, 67.9 mol-% of cationic structural units derived from diallyldimethylammonium chloride and 24.6 mol-% of structural units derived from acrylic acid.

### Example 3 - Synthesis of (co)polymer 3

In a 250 mL multi-necked flask equipped with a KPG-stirrer, a nitrogen supply, a reflux condenser and a thermometer, 22.72 g of demineralized water, 54.47 g of the crude macromonomer 1, 6.1 g of a 75 wt.-% aqueous solution of (3-acrylamidopropyl)trimethylammonium chloride (AAPTAC) and 58.18 g of 65 wt.-% aqueous diallyldimethylammonium chloride solution (DADMAC) was homogenized under stirring (150 rpm) at room temperature (25°C). Afterwards, the reaction mixture was heated to 60°C and purged with nitrogen for 1 hour. In the next step, 3.52 g of 2,2'-azobis[2-(2-imidazolin-2-yl)propane]dihydrochloride (VA-44) dissolved in 18.00 g of demineralized water was dosed under a constant nitrogen flow, at 60°C, over a time period of 90 minutes into the reaction mixture. Thereafter, the reaction mixture was stirred at 60°C for additional 2 hours. After the end of the stirring time, 320.17 g of demineralized water were added at 60°C and the reaction mixture was cooled down to room temperature (25°C).

(co)polymer 3 consists of 9.1 mol-% of macromonomeric structural units derived from macromonomer 1, 83.0 mol-% of cationic structural units derived from diallyldimethylammonium chloride and 7.9 mol-% of cationic structural units derived from (3-acrylamidopropyl)trimethylammonium chloride (in total 90.9 mol-% of cationic structural units).

### Example 4 - Synthesis of (co)polymer 4 (comparative example: (co)polymer does not contain macromonomer)

In a 250 mL multi-necked flask equipped with a KPG-stirrer, a nitrogen supply, a reflux condenser and a thermometer, 22.73 g of demineralized water, 54.47 g of V-PEG 5000, 6.1 g of a 75 wt.-% aqueous solution of (3-acrylamidopropyl)trimethylammonium chloride (AAPTAC) and 58.18 g of 65 wt.-% aqueous diallyldimethylammonium chloride solution (DADMAC) was homogenized under stirring (150 rpm) at room temperature (25°C). Afterwards the reaction mixture was heated to 60°C and purged with nitrogen for 1 hour. In the next step, 3.52 g of 2,2'-azobis[2-(2-imidazolin-2-yl)propane]dihydrochloride (VA-44) dissolved in 18.00 g of demineralized water was dosed under a constant nitrogen flow, at 60°C, over a time period of 90 minutes into the reaction mixture. Thereafter, the reaction mixture was stirred at 60°C for additional 2 hours. After the end of the stirring time, 350.17 g of demineralized water were added at 60°C and the reaction mixture was cooled down to room temperature (25°C).

### Example 5 - Preparation of a hypochlorite-based toilet cleaner

The toilet cleaner used for examples 6 to 8 was formulated as follows:

| Substance | Amount |
|---|---|
| GENAMINOX LA (lauramine oxide) | 1.0 wt.-% |
| Lauric acid | 0.6 wt.-% |
| Sodium hypochlorite | 10 wt.-% |
| Sodium hydroxide | Adjust the pH of the finished formulation to 13.3 |
| Demineralized water | Added up to 100 wt.-% |

### Example 6 - Stability test in hypochlorite-based toilet cleaner

Toilet cleaners with 0.2 wt.-% of (co)polymer 3 was prepared at room temperature (25°C). 50 g of each solution, including a solution of hypochlorite-based toilet cleaner without any further additives as a blank, were then stored in an oven at 50°C for 7 days. The active chlorine value was measured at day 0, 1, 4 and 7, and listed below.

| Test Solution | Active chlorine (wt.-%) | | | |
|---|---|---|---|---|
| | Day 0 | Day 1 | Day 4 | Day 7 |
| Blank (only cleaner) | 4.3 | 4.2 | 3.8 | 3.4 |
| Cleaner + (co)polymer 3 (inventive) | 4.3 | 4.1 | 3.6 | 3.3 |

Copolymer(co)polymer 3 of the present invention is advantageously stable in the hypochlorite-based toilet cleaner, as the content of active chlorine did not drop significantly faster than for the blank sample.

### Example 7 - Limescale build-up prevention

In this test, standard northern European toilets with standard flush (each flush using ca. 7 liters of water) mechanism were used. Each toilet was connected to tap water (with water hardness 15-20 °dH) and was also connected to a wastewater pipe to drain flushed water.

The toilet bowls were thoroughly cleaned with 10 wt.-% aqueous citric acid solution, flushed 3 times and dried for at least 3 hours before each test. 80 g of a test cleaner was distributed evenly onto the surface of the toilet bowls and the test cleaner was allowed to run down to the waterline. The treated toilet bowls were left for 1 hour and 5 flushes were then applied to remove the cleaner residue from the toilet bowls. After that, the toilets were flushed in total 12 times a day for 5 days. The limescale build-up was then evaluated visually after 1, 3 and 5 days and given a score from 0 to 4 (0 - no limescale; 4 - severe limescale build-up). The results are listed below. The hypochlorite-based cleaner, the cleaner + (co)polymer 2 and the cleaner + (co)polymer 3 mentioned in the table below are the compositions as described in examples 5 and 6.

| Test Cleaner | Day 1 | Day 3 | Day 5 |
|---|---|---|---|
| Only hypochlorite-based cleaner | 1 | 3 | 4 |
| Cleaner + (co)polymer 2 (inventive) | 0 | 1 | 2 |
| Cleaner + (co)polymer 3 (inventive) | 0 | 0 | 1 |
| Cleaner + (co)polymer 4 (comparative) | 1 | 2 | 4 |

According to the results, the (co)polymers of the present invention deliver significant limescale build-up inhibition performance.

### Example 8 - Easier next time cleaning

In this test, toilets were cleaned and treated with test cleaners in the same way as described in example 7. After being flushed to remove the cleaner residue, the toilet was left to dry for at least 1 hour. An artificial soil (sunflower oil + fat black) was then applied to the surface of the toilet bowl via pipette. The soil was left on the surface for 15 minutes and the toilets were then flushed (with standard flushes and 15 minutes interval between two flushes) until the soil was completely removed.

The toilet treated with only the hypochlorite-based cleaner took more than 10 flushes to remove all soil. However, the toilet treated with cleaner + (co)polymer 3 took only 3-5 flushes, in which after the first flush, most of the soil was already removed.

## Claims

1. Macromonomer represented by the formula (I) 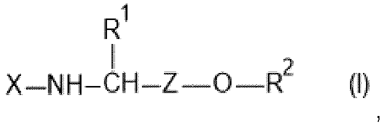 wherein
R¹ is linear or branched alkyl having 1 to 20, preferably 1 to 4 carbon atoms and more preferably 1 carbon atom (methyl);
Z is linear or branched alkylene having 1 to 20, preferably 1 to 4 carbon atoms and more preferably 1 carbon atom (methylene, -CH₂-);
R² is selected from the group consisting of a residue represented by residue R^{II}, hydrogen, and linear or branched alkyl having 1 to 20 carbon atoms,
wherein residue R^{II} consists of:
a number of n chemical units of formula (ii-a): 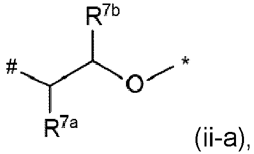
a number of m chemical units of each of formula (ii-b): 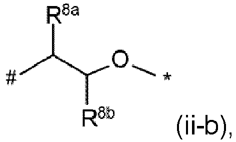 and
exactly one terminal residue T,
wherein
R^{7a}, R^{7b}, R^{8a} and R^{8b} are independently of each other hydrogen or an alkyl group having 1 to 4 carbon atoms, preferably hydrogen or methyl,
where the substituents R^{7a}, R^{7b}, R^{8a} and R^{8b} are chosen such that both of either R^{7a} and R^{7b} or R^{8a} and R^{8b} are hydrogen and at least one of the other substituents is different from hydrogen, preferably such that three of the substituents R^{7a}, R^{7b}, R^{8a} and R^{8b} are hydrogen, and even more preferably such that three of the substituents R^{7a}, R^{7b}, R^{8a} and R^{8b} are hydrogen and the other substituent is a methyl group,
n and m are independently of each other, based on a molar average, numbers of from 0 to 100 such that the sum n + m is of from 4 to 100, preferably of from 8 to 70, more preferably of from 10 to 60 and even more preferably of from 12 to 50,
where in the case that R^{7a} and R^{7b} are both hydrogen, n is a number of from 4 to 100 and m is a number of from 0 to 50, preferably n is from 8 to 70 and m is from 0 to 30, more preferably n is from 10 to 60 and m is from 0 to 25 and even more preferably n is from 12 to 50 and m is from 0 to 20 and when m > 0, the ratio of n to m is larger than 1, preferably at least 2, more preferably at least 3 and even more preferably at least 4,
where in the case that R^{8a} and R^{8b} are both hydrogen, m is a number of from 4 to 100 and n is a number of from 0 to 50, preferably m is from 8 to 70 and n is from 0 to 30, more preferably m is from 10 to 60 and n is from 0 to 25 and even more preferably m is from 12 to 50 and n is from 0 to 20 and when n > 0, the ratio of m to n is larger than 1, preferably at least 2, more preferably at least 3 and even more preferably at least 4,
where in the case that both n and m are > 0, the respective units indexed with n and m are distributed block-wise, alternating, periodically and/or statistically;
T is a linear or branched alkyl having 1 to 20 or hydrogen, preferably 1 to 4 carbon atoms and more preferably 1 carbon atom (methyl),
* is the connecting site to another chemical unit of formula (ii-a) or formula (ii-b) or to the rest of the chemical structure of formula (I) or to the terminal residue T, wherein exactly one of * is a connecting site to the rest of the chemical structure of formula (I) or to the terminal residue T, and
# is the connecting site to another chemical unit of formula (ii-a) or formula (ii-b) or to the terminal residue T or to the rest of the chemical structure of formula (I), wherein exactly one of # is a connecting site to the terminal residue T or to the rest of the chemical structure of formula (I); and
X is represented by one of the following formulae (III) or (IV) 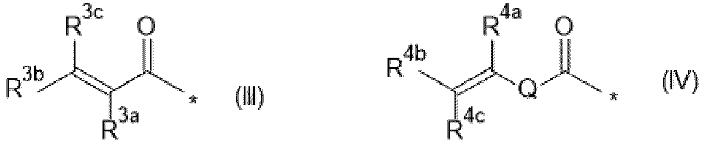
wherein
Q is linear or branched alkylene having 1 to 20, preferably 1 to 4 carbon atoms and more preferably 1 carbon atom (methylene, -CH₂-)
R^{3a}, R^{3b}, R^{3c}, R^{4a}, R^{4b} and R^{4c} are each the same or different and are each independently selected from the group consisting of hydrogen, linear or branched alkyl having 1 to 20 and preferably 1 to 4 carbon atoms, and C₁- to C₄-alkylene carboxylic acid; and
* is the connecting site to the rest of the structure of formula (I).

2. The macromonomer according to claim 1, **characterized in that**:
R¹ is methyl;
Z is methylene;
R² is represented by residue R^{II},
wherein
R^{7a} and R^{7b} are different, one of them is hydrogen and the other one is methyl,
R^{8a} and R^{8b} are both hydrogens,
m is a number of from 4 to 100, preferably from 8 to 70, more preferably from 10 to 60 and even more preferably from 12 to 50,
n is a number of from 0 to 50, preferably from 0 to 30, more preferably from 0 to 25 and even more preferably from 0 to 20,
wherein when n > 0, and
the ratio of m to n is larger than 1, preferably at least 2, more preferably at least 3 and even more preferably at least 4;
T is methyl;
X is represented by one of formulae (III) or (IV), wherein
R^{3a}, R^{3b} and R^{3c} are defined as follows:
(a) R^{3a}, R^{3b} and R^{3c} are each hydrogen,
(b) R^{3a} and R^{3b} are each hydrogen, and
R^{3c} is -COO^{- 1}/ₓM^{x+}, wherein
¹/ₓ M^{x+} is a cation, wherein M is an ion with the ion charge x, preferably selected from the group consisting of monovalent cations M⁺ (x = 1), divalent cations ½ M²⁺ (x = 2) and trivalent cations ⅓ M³⁺ (x = 3) and more preferably selected from the group consisting of H⁺, Li⁺, Na⁺, K⁺, ½ Mg²⁺, ½ Ca²⁺, ⅓ Al³⁺ and NH₄⁺, or
(c) R^{3a} is -CH₂COO^{- 1}/ₓM^{x+} methylene carboxylic acid, wherein
¹/ₓ M^{x+} is a cation, wherein M is an ion with the ion charge x, preferably selected from the group consisting of monovalent cations M⁺ (x = 1), divalent cations ½ M²⁺ (x = 2) and trivalent cations ⅓ M³⁺ (x = 3) and more preferably selected from the group consisting of H⁺, Li⁺, Na⁺, K⁺, ½ Mg²⁺, ½ Ca²⁺, ⅓ Al³⁺ and NH₄⁺, and
R^{3b} and R^{3c} are each hydrogen; and
wherein
R^{4a}, R^{4b} and R^{4c} are defined as follows:
(a) R^{4a}, R^{4b}, R^{4c} and Q are as defined as in claim 1;
(b) R^{4a} is -COO- ¹/ₓM^{x+}, wherein¹/ₓ M^{x+} is a cation, wherein M is an ion with the ion charge x, preferably selected from the group consisting of monovalent cations M⁺ (x = 1), divalent cations ½ M²⁺ (x = 2) and trivalent cations ⅓ M³⁺ (x = 3) and more preferably selected from the group consisting of H⁺, Li⁺, Na⁺, K⁺, ½ Mg²⁺, ½ Ca²⁺, ⅓ Al³⁺ and NH₄⁺, and
R^{4b} and R^{4c} are each hydrogen; and
Q is methylene.

3. A (co)polymer comprising or consisting of one or more types of macromonomeric structural units derived from one or more macromonomers as claimed in claim 1 or 2 as component a).

4. The (co)polymer according to claim 3, **characterized in that** it comprises, in addition to the component a), component b),
wherein component b) comprises one or more cationic structural units that are each derived from one or more cationic monomers of the following formulae (V) and/or (VI): 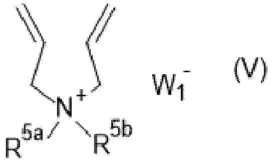 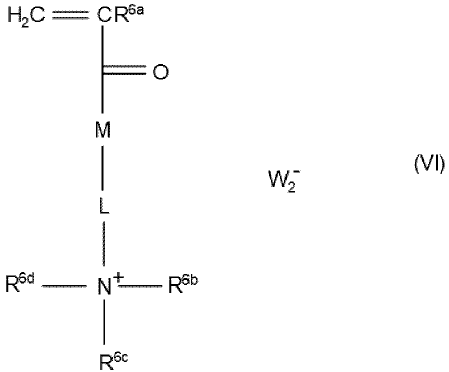 wherein
R^{5a} and R^{6a} are each the same or different and are each independently selected from the group consisting of hydrogen and methyl,
R^{5b}, R^{6b}, R^{6c} and R^{6d} are each the same or different and are each independently selected from the group consisting of an aliphatic hydrocarbyl radical having 1 to 20 and preferably 1 to 4 carbon atoms, hydrogen, a cycloaliphatic hydrocarbyl radical having 5 to 20 and preferably 5 to 8 carbon atoms, an aryl radical having 6 to 14 carbon atoms, and polyethylene glycol (PEG), preferably wherein the residues are each the same or different and are each independently selected from the group consisting of hydrogen and methyl, in particular are each methyl,
M is the same or different and is represented by NH, oxygen, and/or NR^{6b},
L is the same or different and is represented by -(CH₂)ₓ-, 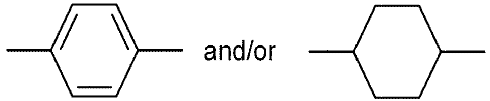
x is the same or different and is represented by an integer from 1 to 6, in particular 2.
W₁ and W₂ are each the same or different and are each independently selected from a halogen, C₁- to C₄-alkylsulfate and C₁- to C₄-alkylsulfonate.

5. The (co)polymer according to claim 3 or 4, **characterized in that** (co)polymer is comprises or consist of
a) from 0.1 to 99.9 mol-%, preferably from 0.5 to 30 mol-%, and more preferably from 1 to 10 mol-%, of one or more structural units of component a), and
b) from 0.1 to 99.9 mol-%, preferably from 70 to 99.5 mol-%, and more preferably from 90 to 99 mol-%, of one or more structure units of component b),
wherein the mole percentages mentioned for components a) and b) in each case are based on the sum of the moles of the components a) and b) of the (co)polymer.

6. The (co)polymer according to one or more of claims 3 to 5, **characterized in that** it comprises:
a) one or more types of macromonomeric structural units derived from one or more macromonomers as claimed in claim 1 or 2 as component a);
b) one or more types of cationic structural units as component b) as defined in claim 4, which differ from the structural units of component a); and
c) one or more types of structural units as component c) which differ from the structural units of components a) and b), in particular (co)polymer wherein the one or more structural units of component c) are derived from the one or more monomers selected from the group consisting of acrylic acid, methacrylic acid, maleic acid, maleic anhydride, itaconic acid and itaconic anhydride,
preferably wherein (co)polymer the (co)polymer comprises or consists of:
a) from 0.1 to 99.8 mol-%, preferably from 0.5 to 75 mol-% and more preferably from 1 to 30 mol-% of one or more structural units of component a),
b) from 0.1 to 99.8 mol-%, preferably from 20 to 94.5 mol-% and more preferably from 50 to 79 mol-% of one or more structure units of component b),
c) from 0.1 to 99.8 mol-%, preferably from 5 to 79.5 mol-% and more preferably from 20 to 49 mol-% of one or more structural units of component c)
wherein the mole percentages mentioned for components a), b) and c) in each case are based on the sum of the moles of the components a), b) and c) of the (co)polymer.

7. The (co)polymer according to one or more of claims 3 to 6, **characterized in that**:
the structural units of components a) and b), and, if present, component c) are present in the (co)polymer in a random, block-wise, alternating or gradient distribution; and/or
(co)polymer the weight average molecular weight M_{w} of the (co)polymer is from 10 000 to 250 000 g/mol, preferably from 15 000 to 200 000 g/mol and more preferably from 20 000 to 150 000 g/mol.

8. Cleaning composition comprising
Z1) one or more (co)polymers as claimed in one or more of claims 3 to 7,
Z2) one or more surfactants, and
Z3) water.

9. The cleaning composition according to claim 8, **characterized in that** it comprises:
Z1) the one or more (co)polymers of component Z1) in an amount from 0.001 to 10% by weight, preferably in an amount from 0.01 to 5% by weight and more preferably in an amount from 0.02 to 0.5% by weight, in each case based on the total weight of the cleaning composition, and/or
Z2) the amount of the one or more surfactants of component Z2) is from 0.1 to 20% by weight and preferably from 0.1 to 10% by weight, in each case based on the total weight of the cleaning composition.

10. The cleaning composition according to claim 8 or 9, **characterized in that** the one or more surfactants of component Z2) are selected from the group consisting of:
(a) anionic surfactants, nonionic surfactants, amphoteric surfactants, cationic surfactants, and mixtures thereof; and/or
(b) fatty alcohol polyglycol ethers, alkyl polyglycosides, alkylbenzenesulfonates, alkanesulfonates, alkyl ether sulfates, alkyl sulfates, N-acylglucamines, preferably N-acyl-N-methylglucamines, quaternary ammonium compounds, and mixtures thereof.

11. The cleaning composition according to one or more of claims 8 to 10, **characterized in that** it further comprises hypochlorite, preferably sodium hypochlorite, preferably in an amount from 0.5 to 6% by weight and more preferably in an amount from 1 to 5% by weight, in each case based on the total weight of the cleaning composition.

12. Use of a cleaning composition according to one or more of claims 8 to 11 (co)polymer for the treatment of hard surfaces, preferably of ceramic, stone, porcelain, glass, stainless steel, metal, plastic, linoleum or wood,
preferably (co)polymer for easier next time cleaning of hard surfaces, preferably in toilets.

13. Use of a at least one (co)polymer as defined in one or more of claims 3 to 7 for the treatment of hard surfaces, preferably of ceramic, stone, porcelain, glass, stainless steel, metal, plastic, linoleum or wood,
preferably for easier next time cleaning of hard surfaces, in particular in toilets, more preferably for preventing the build-up of limescale on hard surfaces, even more preferably in toilets, preferably wherein the cleaning composition is a toilet cleaner and the build-up of limescale in toilets is prevented on the surface of the toilet which is under the water line in the toilet.

14. Use of a cleaning composition according to one or more of claims 8 to 11 (co)polymer for preventing the build-up of limescale on hard surfaces, preferably in toilets,
more preferably wherein the cleaning composition is a toilet cleaner and the build-up of limescale in toilets is prevented on the surface of the toilet which is under the water line in the toilet.

15. A method of treating or cleaning a hard surface, which comprises contacting the hard surface with a cleaning composition according to one or more of claims 8 to 11 or with at least one (co)polymer according to one or more of claims 3 to 7.
